# EUROPEAN PATENT APPLICATION

(11) **EP 3 539 833 A1**
(43) Date of publication of application: **18.09.2019**
(21) Application number: 17869974.0
(22) Date of filing: 01.11.2017
(51) Int. Cl.: B60T 8/17, B60T 13/36, F16K 31/06

(54) **BRAKE SYSTEM**

(30) Priority: 14.11.2016 JP 2016221877
(71) Applicant: Hino Motors, Ltd., Hino-shi, Tokyo 191-8660 (JP)
(72) Inventor: KANDA, Satoshi, Hino-shi Tokyo 191-8660 (JP); MAKIHATA, Tomoaki, Hino-shi Tokyo 191-8660 (JP); EZOE, Toshiki, Hino-shi Tokyo 191-8660 (JP); ICHINOSE, Naoshi, Hino-shi Tokyo 191-8660 (JP)
(74) Representative: Kuhnen & Wacker Patent- und Rechtsanwaltsbüro PartG mbB
(86) International application number: PCT/JP2017/039571
(87) International publication number: WO 2018/088305

(57) **Abstract**

A brake system includes a pneumatic circuit provided with a first and a second passage that supply compressed air from an air tank that stores compressed air to a brake booster; and a control unit that controls a proportional control valve arranged on the second passage. The control unit includes a first signal generator configured to generate a first signal that is a pulse signal having a first frequency and indicates a drive amount of the proportional control valve. The control unit also includes a second signal generator configured to generate a second signal that is a pulse signal having a second frequency, which is less than or equal to one-tenth of the first frequency. The control unit further includes a third signal generator configured to generate a command signal for the proportional control valve by multiplying the first signal by the second signal.

## Description

### TECHNICAL FIELD

The present invention relates to a brake system including an electronic control-type proportional control valve arranged on a pneumatic circuit of an air brake.

### BACKGROUND

An air brake is employed for a brake system of a large automobile such as a truck in order to produce a larger braking force. In an example of an air brake, the compressed air compressed by a compressor driven by the power of the engine is stored in the air tank, and the stored compressed air is supplied to the brake booster, thereby activating the brake. Patent Document 1 describes a recent example of a brake system including an air brake. When it is determined that the automobile is highly likely to collide with a front obstacle, the brake system functions to support avoidance of the collision by automatically activating the brake.

The example of the brake system having such a function includes a first passage and a second passage that serve as supply passages for compressed air from the air tank to the brake booster. The first passage includes a brake valve that opens when the brake pedal is operated. The second passage includes an electronic control-type proportional control valve of which the open degree varies in a linear manner depending on the level of a drive current. The proportional control valve is controlled by a controller. When the controller determines that the collision is highly likely to occur, the controller causes the proportional control valve to open, thereby supplying compressed air through the second passage to the brake booster. The pressure of the compressed air supplied to the brake booster is increased by increasing the opening degree of the proportional control valve as the distance of the obstacle becomes closer.

### PRIOR ART DOCUMENT

### Patent Document

Patent Document 1: Japanese Laid-Open Patent Publication No. 2009-149111

### SUMMARY OF THE INVENTION

### Problems that the Invention Solves

The proportional control valve has a characteristic in which the pressure of compressed air, which is an output value, differs depending on the directivity of an input value applied to the proportional control valve. This characteristic is referred to as hysteresis. Further, the controller may control the proportional control valve in addition to other devices such as a hydraulic device. In this case, the controller is normally designed to generate a signal having a high frequency of 1 kHz or higher, which is favorable for controlling a hydraulic device, and output the generated high-frequency signal. The high-frequency signal tends to increase the hysteresis of the proportional control valve. Thus, the above-described brake system is required to reduce the hysteresis even if the high-frequency signal is generated as a signal to the proportional control valve.

It is an objective of the present invention to provide a brake system that reduces hysteresis that occurs in an electronic control-type proportional control valve arranged on a pneumatic circuit even if a high-frequency signal is generated as a signal to the proportional control valve.

### Means for Solving the Problem

A brake system includes an air tank that stores compressed air, a brake booster configured to activate a brake when supplied with the compressed air, and a pneumatic circuit including a first passage that supplies the compressed air from the air tank to the brake booster. The first passage includes a brake valve of which an opening degree is controlled in accordance with a depression amount of a brake pedal. The pneumatic circuit also includes a second passage that supplies the compressed air from the air tank to the brake booster. The second passage includes a proportional control valve of which an opening degree is controlled through electronic control. The brake system also includes a control unit configured to control the proportional control valve. The control unit includes a first signal generator configured to generate a first signal. The first signal is a pulse signal having a first frequency and indicates a drive amount of the proportional control valve. The control unit also includes a second signal generator configured to generate a second signal. The second signal is a pulse signal having a second frequency, which is less than or equal to one-tenth of the first frequency The control unit further includes a third signal generator configured to generate a command signal for the proportional control valve by multiplying the first signal by the second signal.

### BRIEF DESCRIPTION OF THE DRAWINGS

Fig. 1 is a diagram schematically illustrating the structure of a brake system according to a first embodiment.
Fig. 2 is a block diagram schematically illustrating the configuration of an example of a controller in the brake system shown in Fig. 1.
Fig. 3 is a functional block diagram illustrating the example of the controller in the brake system shown in Fig. 1.
Fig. 4 is a diagram schematically illustrating examples of various types of signals generated in the ECU of the controller shown in Fig. 1.
Fig. 5 is a diagram schematically illustrating examples of various types of signals generated in the controller shown in Fig. 1.
Fig. 6 is a graph illustrating the relationship between a drive current value and pressure in the brake system shown in Fig. 1 by comparing a reference example with a comparative example.
Fig. 7 is a functional block diagram illustrating an example of a controller of a brake system according to a second embodiment.
Fig. 8A is a diagram schematically illustrating examples of various types of signals generated in the controller shown in Fig. 7, showing an example in which a target current value is small.
Fig. 8B is a diagram schematically illustrating the examples of various types of signals generated in the controller shown in Fig. 7, showing an example in which the target current value is large.

### MODES FOR CARRYING OUT THE INVENTION

### First Embodiment

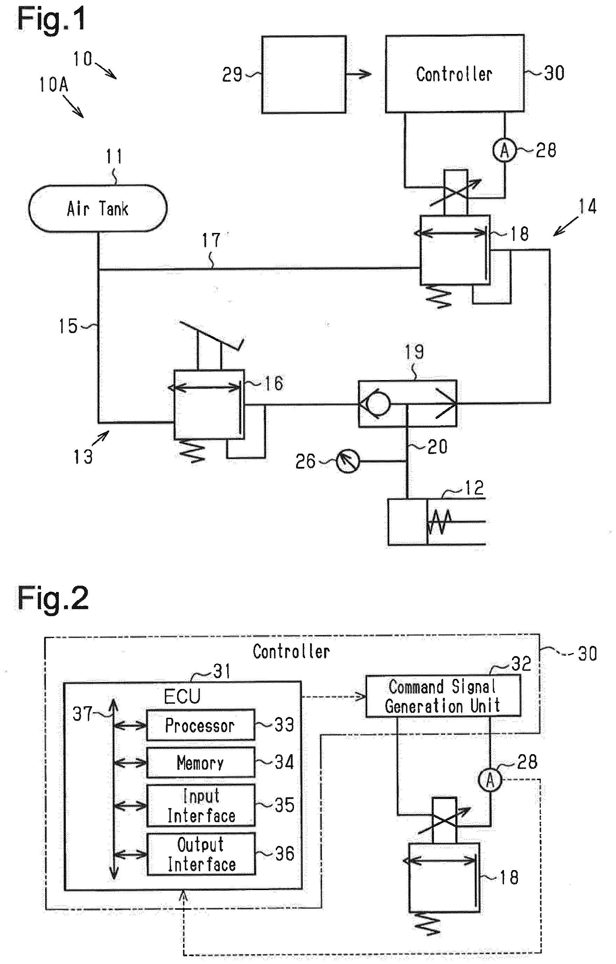

A brake system according to a first embodiment will now be described with reference to Figs. 1 to 6.

As shown in Fig. 1, a pneumatic circuit 10A of a brake system 10 includes an air tank 11 that stores compressed air compressed by a compressor driven by the engine. When the compressed air in the air tank 11 is supplied to a brake booster 12, the brake is activated.

The pneumatic circuit 10A includes a first passage 13 and a second passage 14 that serve as supply passages through which compressed air in the air tank 11 is supplied to the brake booster 12. The first passage 13 includes a first supply passage 15 connected to the air tank 11 and a brake valve 16 arranged on the first supply passage 15. The brake valve 16 controls the pressure of compressed air supplied to the brake booster 12 in accordance with the depression amount of the brake pedal operated by a driver. The brake valve 16 supplies compressed air having a higher pressure to the brake booster 12 as the depression amount of the brake pedal becomes larger.

The second passage 14 includes a second supply passage 17 and a proportional control valve 18. The second supply passage 17 is connected to the air tank 11 via a part of the first supply passage 15 located upstream of the brake valve 16. The proportional control valve 18 is arranged on the second supply passage 17. The proportional control valve 18 is an electronic control-type proportional control valve controlled by a controller 30. As the opening degree of the proportional control valve 18 increases, the pressure of compressed air supplied to the brake booster 12 increases. The controller 30 determines whether the possibility of the vehicle colliding with a front obstacle detected by a millimeter wave radar is high or low based on various types of information such as the vehicle speed and the distance to the obstacle detected by the millimeter wave rader. When determining that the possibility of the collision is high, the controller 30 opens the proportional control valve 18. Further, the controller 30 controls the opening degree of the proportional control valve 18 such that the pressure of compressed air supplied to the brake booster 12 becomes higher as the distance to the obstacle becomes closer. In the pneumatic circuit 10A, the first supply passage 15 and the second supply passage 17 may be connected to the air tank 11 independently from each other.

The pneumatic circuit 10A includes a shuttle valve 19. The shuttle valve 19 includes an inlet to which the first supply passage 15 is connected and another inlet to which the second supply passage 17 is connected. The shuttle valve 19 supplies, to the brake booster 12 through a common passage 20, the higher-pressure one of the compressed air supplied from the first supply passage 15 and the compressed air supplied from the second supply passage 17.

More specifically, in the first passage 13, the compressed air flows from the air tank 11 into the first supply passage 15, passes through the brake valve 16, and then flows into the shuttle valve 19. In the second passage 14, the compressed air flows from the air tank 11 into the second supply passage 17, passes through the proportional control valve 18, and then flows into the shuttle valve 19. In both the first passage 13 and the second passage 14, compressed air flows from the shuttle valve 19 through the common passage 20 to the brake booster 12.

The brake system 10 includes a pressure sensor 26 located in the common passage 20, which connects the shuttle valve 19 to the brake booster 12. The pressure sensor 26 detects a pressure Pa of compressed air flowing through the common passage 20. The pressure sensor 26 outputs a signal indicating the detected pressure Pa to the controller 30. The brake system 10 includes a current sensor 28 located in a circuit that supplies a power of a supply voltage Vo from the controller 30 to the proportional control valve 18. The current sensor 28 detects a drive current value Ia of the proportional control valve 18. The current sensor 28 outputs a signal indicating the detected drive current value Ia to the controller 30. The controller 30 is powered by a power supply 29 to control the proportional control valve 18.

The controller 30 that controls the proportional control valve 18 will now be described with reference to Figs. 2 to 6.

As shown in Fig. 2, the controller 30 is configured mainly by an electronic control unit (ECU) 31 and includes the ECU 31 and a command signal generation unit 32. The controller 30 may include a microcomputer and/or a dedicated hardware (application specific integrated circuit; ASIC) that executes at least some of various types of processes. That is, the ECU 50 may be configured by circuitry including 1) one or more processors (microcomputers) running on computer programs (software), 2) one or more dedicated hardware circuits such as ASIC, or 3) a combination thereof. More specifically, the ECU 31 includes for example, a processor 33, a memory 34, an input interface 35, and an output interface 36 that are connected to one another by a bus 37. The ECU 31 obtains signals from the pressure sensor 26 and the current sensor 28 via the input interface 35. The ECU 31 executes various types of processes based on a program and various types of data stored in the memory 34 as well as the pressure Pa and the drive current value Ia received from the sensors 26 and 28, and the ECU 31 outputs a first signal, which indicates the drive amount of the proportional control valve 18, to the command signal generation unit 32 via the output interface 36. The command signal generation unit 32 generates a command signal Sc based on the first signal and applies the generated command signal Sc to the proportional control valve 18.

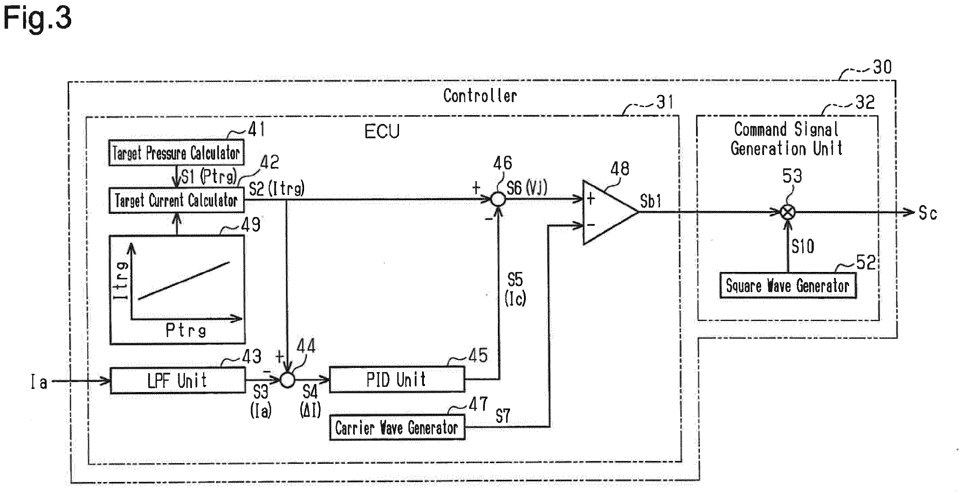

As shown in Fig. 3, the ECU 31 includes, as various types of functional units, a target pressure calculator 41, a target current calculator 42, an LPF unit 43, a first subtractor 44, a PID unit 45, a second subtractor 46, a carrier wave generator 47, and a comparator 48.

The target pressure calculator 41 calculates a target pressure Ptrg, which is the pressure of compressed air supplied to the brake booster 12, based on, for example, the vehicle speed and the distance to an obstacle. Then, the target pressure calculator 41 outputs a target pressure signal S1, which indicates the target pressure Ptrg, to the target current calculator 42.

The target current calculator 42 calculates a target current value Itrg, which is a target value of the drive current of the proportional control valve 18, based on the target pressure Ptrg and a target current table 49 stored in the memory 34. The target current table 49 defines the target current value Itrg such that the target current value Itrg increases as the target pressure Ptrg increases. The target current calculator 42 outputs a target current signal S2, which indicates the calculated target current value Itrg.

The LPF (Low Pass Filter) unit 43 eliminates a high-frequency component included in a signal from the current sensor 28 and outputs a drive current signal S3, which indicates the drive current value Ia of the proportional control valve 18, to the first subtractor 44.

The first subtractor 44 calculates a difference ΔI between the target current value Itrg, which is indicated by the target current signal S2, and the drive current value la, which is indicated by the drive current signal S3. Then, the first subtractor 44 outputs a difference signal S4, which indicates the difference ΔI, to the PID unit 45.

The PID (Proportional Integral Differential) unit 45 calculates a correction value Ic used to correct the target current value Itrg based on the difference ΔI, which is calculated by the first subtractor 44. The correction value Ic is the sum of a proportional term used to perform proportional control based on the difference ΔI, an integral term used to perform integral control based on the difference ΔI, and a differential term used to perform differential control based on the difference ΔI. The PID unit 45 outputs a correction signal S5, which indicates the correction value Ic, to the second subtractor 46.

The second subtractor 46 subtracts the correction value Ic, which is indicated by the correction signal S5, from the target current value Itrg, which is indicated by the target current signal S2. Then, the second subtractor 46 calculates a drive current value lat, which is the drive amount of the proportional control valve 18 suitable for achieving the target pressure Ptrg, as a determination value Vj. The determination value Vj is used to generate a first signal Sb1, which serves as a base for generating the command signal Sc. The second subtractor 46 outputs a determination signal S6, which indicates the determination value Vj, to the comparator 48. The target pressure calculator 41, the target current calculator 42, the LPF unit 43, the first subtractor 44, the PID unit 45, and the second subtractor 46 configure a drive amount calculation unit.

The carrier wave generator 47 generates a carrier wave such as a triangle wave and a sawtooth wave. The carrier wave generator 47 of the present embodiment generates a triangle wave to generate the first signal Sb1 and outputs a triangle wave signal S7, which is the generated triangle wave, to the comparator 48. A triangle wave frequency f1 is set to a frequency of 1 kHz or higher, which is higher than a frequency f2 of a second signal generated by a second signal generator 52 (described later). For example, the frequency f1 is set to 1650 Hz. The frequency f1 corresponds to a first frequency and is used by the ECU 31 when generating a command signal to other devices suitable for control at a frequency of 1 kHz or higher, such as a hydraulic device. It is preferred that the frequency f1 be greater than or equal to approximately 1 kHz to control a hydraulic device.

The comparator 48 functions as a first signal generator. The comparator 48 compares the determination value Vj, which is indicated by the determination signal S6, with a value of the triangle wave signal S7 at a corresponding point in time. This generates the first signal Sb1 of the frequency f1, at which a section where the determination signal S6 has a larger value than the triangle wave signal S7 is set as an ON-section. Thus, as the determination value Vj corresponding to the drive current value lat, which is the drive amount of the proportional control valve 18 suitable for achieving the target pressure Ptrg, becomes larger, the pulse width of the first signal Sb1 is set to be larger. The first signal Sb1 is a pulse signal having the supply voltage Vo.

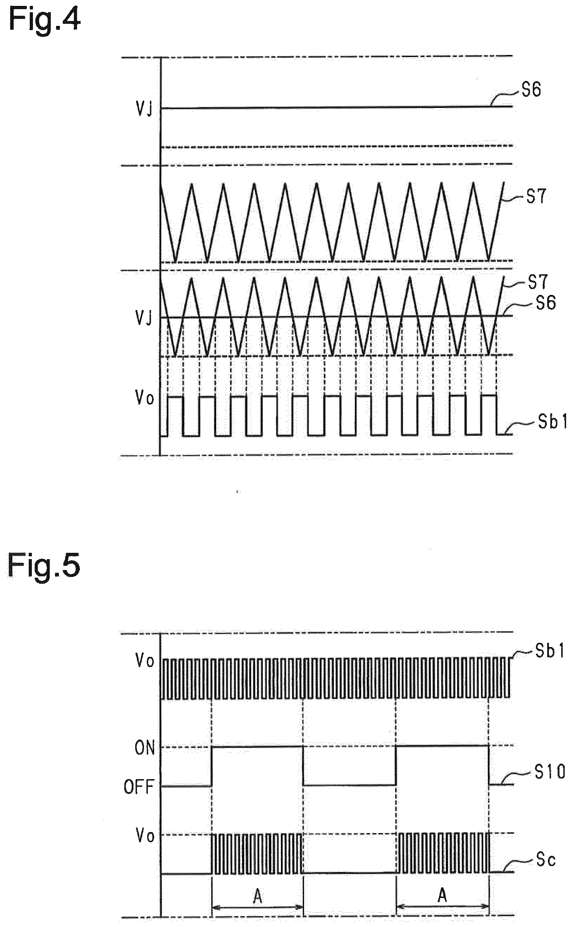

More specifically, as shown in Fig. 4, the ECU 31 generates the determination signal S6, in which the target current signal S2 is corrected by using the correction signal S5, and compares the determination signal S6 with the triangle wave signal S7 to generate the first signal Sb1 of the frequency f1. Then, the ECU 31 outputs the generated first signal Sb1 to the command signal generation unit 32.

As shown in Figs. 3 and 5, the command signal generation unit 32 includes the second signal generator 52 and a multiplier 53, which functions as a third signal generator. The second signal generator 52 generates a square wave, which is a pulse signal used to generate the command signal Sc based on the first signal Sb1. Then, the second signal generator 52 outputs a second signal S10, which indicates the generated square wave, to the multiplier 53. The frequency f2 of the second signal S10 corresponds to a second frequency. It is preferred that the frequency f2 be less than or equal to one-tenth of the first frequency, for example, less than or equal to approximately 100 Hz. In the present embodiment, the second frequency f2 is set to be suitable for controlling the opening degree of the proportional control valve 18. Further, the second frequency f2 is less than or equal to 100 Hz, which is lower than the frequency of a triangle wave generated by the carrier wave generator 47, for example, 70 Hz. The second signal S10 has a duty cycle D1, which is set to 50%. The multiplier 53 multiplies the first signal Sb1 of the frequency f1, which is a high-frequency signal, by the second signal S10, which is a low-frequency signal. Thus, a section where the first signal Sb1 and the second signal S10 are both set to ON-sections is defined as an ON-section, thereby generating the command signal Sc having the supply voltage Vo.

More specifically, as shown in Fig. 5, the command signal generation unit 32 multiplies the first signal Sb1 by the second signal S10 to generate the command signal Sc, in which a power supply region A, where the ON-section of the supply voltage Vo is repeated at the frequency f1, is repeated at the frequency f2. Then, the command signal generation unit 32 applies the generated command signal Sc to the proportional control valve 18.

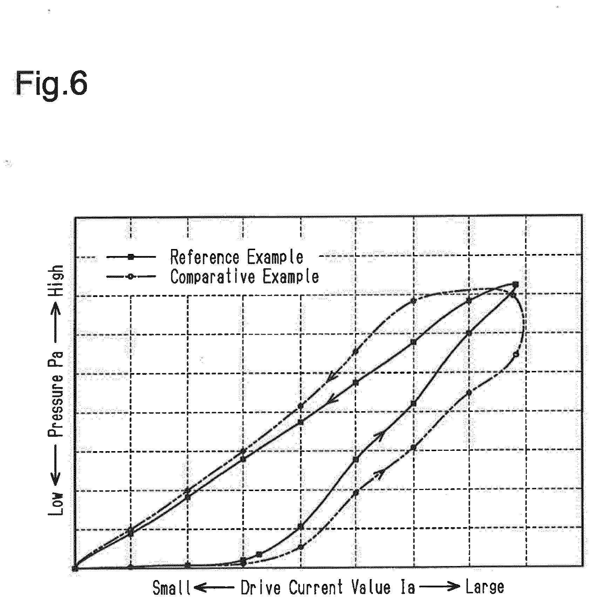

The operation of the brake system 10 will now be described with reference to Fig. 6.

When the controller 30 determines that the vehicle is highly likely to collide with a front obstacle detected by a millimeter wave radar based on various types of information such as the vehicle speed and the distance to the obstacle detected by the millimeter wave radar, the controller 30 opens the proportional control valve 18. The controller 30 generates the command signal Sc to the proportional control valve 18 by multiplying the first signal Sb1 having the frequency f1 (1650 Hz), which is generated by the ECU 31, by the second signal S10 having the frequency f2 (70 Hz), which is generated by the second signal generator 52. Thus, the proportional control valve 18 receives the command signal, in which the power supply region A, where the ON-section is set at the frequency f1, is repeated at the frequency f2.

Fig. 6 is a graph illustrating the relationship between the changes in the drive current value Ia and the pressure Pa of compressed air supplied to the brake booster 12 with a comparative example in which the first signal Sb1 is used to control the proportional control valve 18 and a reference example in which the command signal Sc is used to control the proportional control valve 18. As shown in Fig. 6, this shows that the hysteresis in the reference example is significantly smaller than that of the comparative example.

The brake system 10 according to the first embodiment has the following advantages.
(1) The proportional control valve 18 receives the command signal Sc. In the command signal Sc, the power supply region A, where the ON-section is repeated at the frequency f1 of the first signal Sb1, is repeated at the frequency f2 of the second signal S10. The frequency f1 of the ON-section in the power supply region A is sufficiently higher than the frequency f2 of the second signal S10. Thus, the proportional control valve 18 receives the command signal Sc, which substantially has the frequency f2 of the second signal S10, and is supplied with the supply voltage Vo substantially at the frequency f2. This reduces the frequency of the command signal received by the proportional control valve 18, thereby reducing hysteresis that occurs in the proportional control valve 18. As a result, the control accuracy of the pressure Pa using the proportional control valve 18 is improved.
(2) The controller 30 includes the ECU 31, which generates the first signal Sb1, and the command signal generation unit 32, which generates the command signal Sc based on the first signal Sb1. Thus, while the ECU 31 is configured to generate various types of signals at the frequency f1 of the first signal Sb1, the command signal generation unit 32 modulates the signal Sc received by the proportional control valve 18 to a low-frequency pulse signal of substantially less than or equal to 100 Hz. This allows the command signal Sc to be generated at a frequency suitable for the proportional control valve 18 without changing the basic design of the ECU 31.
(3) While setting each of the frequency f2 and the duty cycle D1 of the second signal S10 to be a fixed value, the controller 30 controls the drive current value Ia of the proportional control valve 18 by controlling the pulse width of the first signal Sb1. In such a configuration, since the frequency f2 of the second signal S10 is fixed, the performance of responding to the variation in the target current value Itrg increases. Further, the proportional control valve 18 can be controlled at a frequency corresponding to the characteristic of the proportional control valve 18.

### Second Embodiment

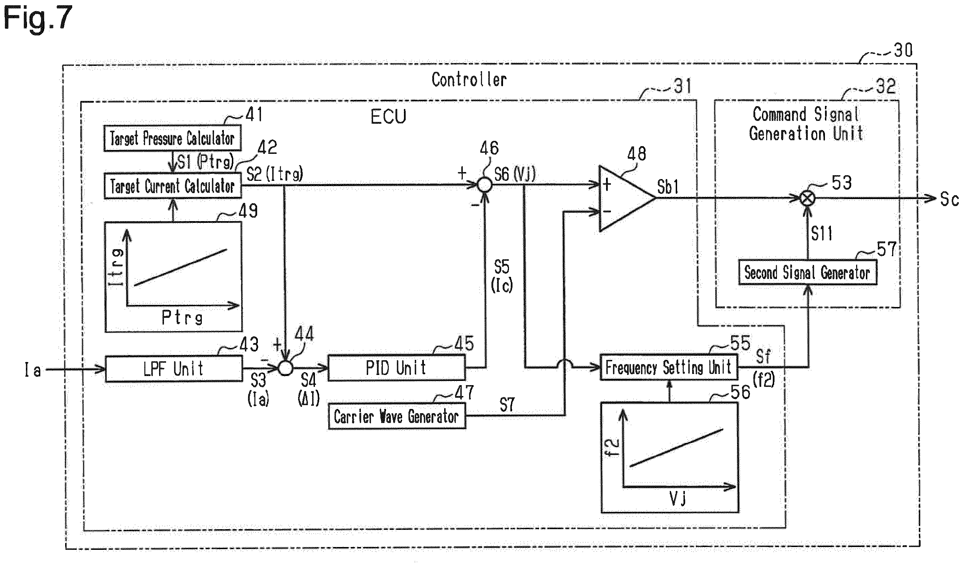

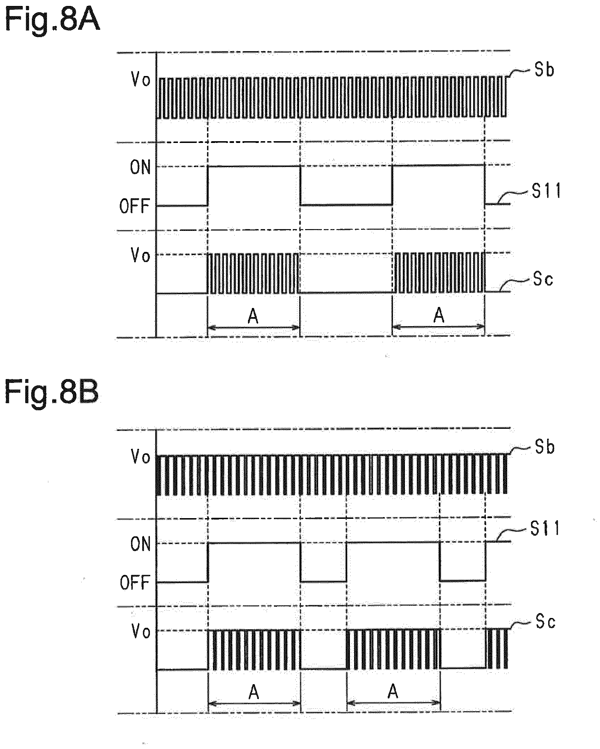

A brake system according to a second embodiment will now be described with reference to Figs. 7 and 8. The brake system according to the second embodiment has the same main configuration as the brake system according to the first embodiment. Thus, in the second embodiment, the following detailed description focuses on the parts that differ from the first embodiment, and like or same reference numerals are given to those parts that are the same as the corresponding parts of the first embodiment. Such components will not be described in detail.

As shown in Fig. 7, in the controller 30, the ECU 31 includes a frequency setting unit 55. The frequency setting unit 55 sets the frequency f2 of a pulse signal generated by a second signal generator 57 of the command signal generation unit 32. The frequency setting unit 55 calculates the frequency f2 based on the determination value Vj, which is indicated by the determination signal S6 received from the second subtractor 46. The frequency setting unit 55 sets the frequency f2 based on, for example, a frequency table 56 stored in the memory 34. The frequency table 56 defines a frequency suitable to control the proportional control valve 18 of the pneumatic circuit. This frequency increases as the determination value Vj increases, with the minimum value of 0 Hz (direct current) and the maximum value of 100 Hz. The frequency setting unit 55 outputs a frequency signal Sf, which indicates the calculated the frequency f2, to the command signal generation unit 32.

In the command signal generation unit 32, the second signal generator 57 generates a second signal S11 of the frequency f2, of which the pulse width is determined in advance, based on the frequency signal Sf from the frequency setting unit 55. The second signal generator 52 outputs the generated second signal S11 to the multiplier 53.

The multiplier 53 multiplies the first signal Sb1, which is a high-frequency signal, by the second signal S11, which is a low-frequency signal. Thus, a section where the first signal Sb1 and the second signal S11 are both set as ON-sections is set as an ON-section, thereby generating the command signal Sc having the supply voltage Vo.

More specifically, as shown in Fig. 8A and 8B, the command signal generation unit 32 multiplies the first signal Sb1 by the second signal S11 to generate the command signal Sc, in which a power supply region A, where the ON-section is repeated at the frequency f1, is repeated at the frequency f2. When the drive current of the proportional control valve 18 is set to be large, the frequency of the command signal Sc increases so that the proportion of the power supply region A per unit of time increases. The command signal generation unit 32 outputs the generated command signal Sc to the proportional control valve 18. Fig. 8A shows examples of various types of signals when the target current value Itrg is small, and Fig. 8B shows the examples of the signals when the target current value Itrg is large. The examination of the relationship between the drive current value Ia and the pressure P with the second embodiment employed as a reference example reveals that the hysteresis of the reference example significantly decreases in the second embodiment in the same manner as the relationship between the comparison example and the reference example in Fig. 6.

The brake system 10 according to the second embodiment has the following advantage (4) in addition to advantage (1) of the first embodiment.

(4) As the drive amount of the proportional control valve 18 decreases, the frequency f2 of the second signal S11 decreases. Thus, the power consumption is effectively reduced as the drive amount of the proportional control valve 18 decreases.

The first and second embodiments may be modified as described below.

In the first and second embodiments, the controller 30 may be implemented by a single ECU including the functional units of the ECU 31 and the functional units of the command signal generation unit 32.

In the first and second embodiments, the first signal Sb1 may be a high-frequency signal having a predetermined duty cycle. In this case, the ECU 31 sets the pulse width of the second signal S10 based on the determination value Vj in the first embodiment, where the frequency of the second signal S10 is fixed. Further, the ECU 31 sets the frequency of the second signal S11 based on the determination value Vj in the second embodiment, where the pulse width of the second signal S10 is fixed.

In the first embodiment, the duty cycle D1 of the second signal S10 is not limited to 50%.

In the first embodiment, the frequency f2 of the second signal S10 simply needs to be less than or equal to 100 Hz and is not limited to 70 Hz.

## Claims

1. A brake system comprising:
an air tank that stores compressed air;
a brake booster configured to activate a brake when supplied with the compressed air;
a pneumatic circuit including
a first passage that supplies the compressed air from the air tank to the brake booster, wherein the first passage includes a brake valve of which an opening degree is controlled in accordance with a depression amount of a brake pedal, and
a second passage that supplies the compressed air from the air tank to the brake booster, wherein the second passage includes a proportional control valve of which an opening degree is controlled through electronic control; and
a control unit configured to control the proportional control valve,
wherein the control unit includes
a first signal generator configured to generate a first signal, wherein the first signal is a pulse signal having a first frequency and indicates a drive amount of the proportional control valve,
a second signal generator configured to generate a second signal, wherein the second signal is a pulse signal having a second frequency, which is less than or equal to one-tenth of the first frequency, and
a third signal generator configured to generate a command signal for the proportional control valve by multiplying the first signal by the second signal.

2. The brake system according to claim 1, wherein
the first frequency is greater than or equal to approximately 1 kHz, and
the second frequency is less than or equal to approximately 100 kHz.

3. The brake system according to claim 1 or 2, wherein
the first signal has a fixed frequency and a pulse width that increases as the drive amount of the proportional control valve increases, and
the second signal has a fixed frequency and a fixed pulse width.

4. The brake system according to claim 3, wherein the second signal is a square wave of which a duty cycle is set to 50%.

5. The brake system according to claim 1 or 2, wherein
the first signal has a fixed frequency and a pulse width that increases as the drive amount of the proportional control valve increases, and
the second signal has a frequency that increases as the drive amount of the proportional control valve increases and a fixed pulse width.

6. The brake system according to any one of claims 1 to 5, wherein the control unit includes
an electronic control unit including the first signal generator and a drive amount calculation unit that calculates the drive amount of the proportional control valve, and
a command signal generation unit including the second signal generator and the third signal generator.
